**Europäisches Patentamt**

**European Patent Office**

**Office européen des brevets**

(19)

(11) **EP 1 429 431 A1**

(12) **EUROPEAN PATENT APPLICATION**
published in accordance with Art. 158(3) EPC

(43) Date of publication:
**16.06.2004 Bulletin 2004/25**

(51) Int Cl.7: **H01S 1/02**, G01N 21/01,
G01N 21/35

(21) Application number: **02765611.5**

(22) Date of filing: **20.09.2002**

(86) International application number:
**PCT/JP2002/009687**

(87) International publication number:
**WO 2003/028173 (03.04.2003 Gazette 2003/14)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **21.09.2001 JP 2001029018**

(71) Applicants:
• **Nikon Corporation
Tokyo 100-8331 (JP)**

• **Tochigi Nikon Corporation
Otawa-shi, Tochigi 324-8625 (JP)**

(72) Inventor: **USAMI, Mamoru
Ohtawara-shi, Tochigi 324-8625 (JP)**

(74) Representative: **Walaski, Jan Filip et al
Venner, Shipley & Co,
20 Little Britain
London EC1A 7DH (GB)**

(54) **TERAHERTZ LIGHT APPARATUS**

(57)     A terahertz light generation element 8 emits terahertz light as excitation pulse light is emitted onto an area between electrically conductive films 32 and 33 formed on a substrate 31 while a bias voltage is applied between the electrically conductive films 32 and 33. A terahertz light detection unit 13 outputs an electrical signal corresponding to the intensity level of the electric field of the terahertz light entering the terahertz light detection unit. The polarity of the electric field of the terahertz light is modulated by inverting the polarity of the bias voltage applied between the pair of electrically conductive films. By using a reference signal synchronous with the polarity inversion of the bias voltage applied between the pair of electrically conductive films, the electrical signal provided by the terahertz light detection unit 13 is amplified at a lock-in amplifier 24.

FIG. 1

**EP 1 429 431 A1**

# Description

## INCORPORATION BY REFERENCE

The disclosure of the following priority application is herein incorporated by reference:

Japanese Patent Application No. 2001-290188 filed September 21, 2001

## TECHNICAL FIELD

The present invention relates to a terahertz light technology achieved by utilizing a photonic switch element.

## BACKGROUND ART

While a photonic switch element such as a photoconductive antenna or a nonlinear optical crystal is employed to detect terahertz light, only an extremely weak signal can be detected either way. Accordingly, a method whereby terahertz light is modulated at a given frequency and a signal synchronous with the modulation frequency alone is amplified with a lock-in amplifier or the like (lock-in detection) is widely adopted.

In addition, a great number of attempts have been made to obtain a two-dimensional image formed by terahertz light. While a CCD camera or a photoconductive antenna array is used as a detector in such a process, a lock-in amplifier must be provided for each pixel if the two-dimensional image is to be obtained through a lock-in detection, giving rise to cost and space related problems. Zhiping Jiang et al. addressed this issue in an article ("Improvement of Terahertz Imaging with a Dynamic Subtraction Technique", Applied Optics, Vol. 39 No. 17 pp 2982-2987, 10 June, 2000), in which a lock-in detection is achieved in software and an improvement in the S N ratio is realized. Namely, the intensity of the pump light used to generate terahertz light is turned on/off at a constant frequency and thus, the amplitude of the terahertz light is modulated at the constant frequency. Processing for obtaining terahertz images with a CCD camera in synchronization with the modulation and subtracting an image obtained when the pump light is in an OFF state from an image obtained when the pump light is in an ON state is executed on a computer.

When detecting terahertz images as described above, the intensity of the terahertz light (or the pump light used to generate the terahertz light) is first modulated with a light chopper or the like. Then, the signal synchronous with the modulation frequency alone is amplified by utilizing a lock-in amplifier or through data processing executed on the computer. However, since the light chopper or the like turns on/off the terahertz light, the terahertz light is not utilized efficiently while it is in an OFF state (utilization efficiency; 50%).

This problem is addressed by Q, Chen and X. - C. Zhang in an article (Applied Physics Letters, Vol. 74, No. 23, pp3435 - 3437, 7 June 1999), in which a lock-in detection is executed by employing a terahertz light source constituted of a ZnTe crystal. Namely, by modulating the direction of the pump light polarization, the polarization of the terahertz light which is generated is modulated to achieve a lock-in detection. By adopting this method, it becomes possible to achieve a terahertz light utilization efficiency of 100%. Q. Chen and X. - C. Zhang actually succeeded in achieving a terahertz light signal amplitude which was up to twice that achieved in the prior art, thereby greatly improving the SN ratio.

When a photonic switch element such as a photoconductive antenna is used as a terahertz light source, the polarization direction of the generated terahertz light remains unchanged even if the direction of the polarization of the pump light is changed. Thus, a lock-in detection can only be achieved in the related art by turning on/off the terahertz light.

For this reason, as long as the lock-in detection is executed by utilizing a photonic switch element such as a photoconductive antenna as a terahertz light source, the utilization efficiency of the terahertz light cannot be improved and ultimately, the SN ratio cannot be greatly improved in the related art.

## DISCLOSURE OF THE INVENTION

The present invention provides a modulation drive method to be adopted in conjunction with a terahertz light generation element, which improves the utilization efficiency of terahertz light emitted from a terahertz light source constituted of a photonic switch element such as a photoconductive antenna.

The present invention also provides a terahertz light detection method, an imaging method, an imaging device and a terahertz light device, which make it possible to improve the SN ratio by driving a terahertz light generation element through the modulation drive method.

In a first mode of the present invention, the modulation drive method for a terahertz light generation element is provided. The terahertz light generation element, which includes at least a pair of electrically conductive portions formed over a predetermined distance from each other at a photoconductive unit, emits terahertz light as excitation pulse light is emitted over the area between the electrically conductive portions while a bias voltage is applied between the pair of electrically conductive portions. In the terahertz light generation element modulation drive method achieved in the first mode of the present invention, the polarity of the electric field of the terahertz light is modulated by inverting the polarity of the bias voltage applied between the pair of electrically conductive portions at the terahertz light generation element.

In the terahertz light detection method achieved in a second mode of the present invention, terahertz light is detected through modulation drive of a terahertz light generation element. In the terahertz light detection method, a first electrical signal is obtained from a terahertz light detection element while a bias voltage with a given polarity is applied between a pair of electrically conductive portions. In addition, a second electrical signal is obtained from the terahertz light detection element while a bias voltage with another polarity is applied between the pair of electrically conductive portions. Then, a detection signal is obtained based upon the first and second electrical signals. The detection signal may be obtained by calculating the difference between the first electrical signal and the second electrical signal.

In the terahertz light detection method achieved in a third mode of the present invention, the terahertz light generation element and the terahertz light detection unit described above are utilized. In this terahertz light detection method, the polarity of the electric field of the terahertz light is modulated by inverting the polarity of the bias voltage applied between the pair of electrically conductive portions at the terahertz light generation element as described above and an electrical signal provided by the terahertz light detection unit is amplified by a lock-in amplifier by using a reference signal synchronous with the inversion of the polarity of the bias voltage applied between the pair of electrically conductive portions.

The imaging method achieved in a fourth mode of the present invention utilizes the terahertz light generation element described above and a terahertz light detection unit. Terahertz light output from the terahertz light generation element two-dimensionally enters the terahertz light detection unit via an object to be measured (measurement object), and the terahertz light detection unit, in turn, outputs electrical signals indicating the levels of electric field intensity at individual positions of entry in correspondence to specific entry positions. An image of the measurement object is then formed based upon the electrical signals corresponding to the individual entry positions output from the terahertz light detection unit. In the imaging method, the polarity of the electric field of the terahertz light is modulated by inverting the polarity of the bias voltage applied between the pair of electrically conductive portions as described earlier and an image signal is obtained based upon a first electrical signal provided by the terahertz light detection unit while the biased voltage with a given polarity is applied between the pair of electrically conductive portions and a second electrical signal provided by the terahertz light detection unit while the bias voltage with another polarity is applied between the pair of electrically conductive portions. The image signal can be obtained by calculating the difference between the first electrical signal and the second electrical signal.

The terahertz light device achieved in a fifth mode of the present invention comprises the terahertz light generation element described above, the terahertz light detection unit used in the third mode, a bias voltage control unit that modulates the polarity of the electric field of the terahertz light by inverting the polarity of the bias voltage applied between the pair of electrically conductive portions and a signal processing unit that obtains a detection signal. The signal processing unit obtains the detection signal based upon a first electrical signal provided by the terahertz light detection unit while the bias voltage with a given polarity is applied between the pair of electrically conductive portions and a second electrical signal provided by the terahertz light detection unit while the bias voltage with another polarity is applied between the pair of electrically conductive portions. The signal processing unit may obtain the detection signal by calculating the difference between the first electrical signal and the second electrical signal.

The terahertz light device achieved in a sixth mode of the present invention comprises the terahertz light generation element describe earlier, the terahertz light detection unit used in the third mode, the bias voltage control unit described above and a lock-in amplifier that amplifies an electrical signal provided by the terahertz light detection unit by using a reference signal synchronous with the inversion of the polarity of the bias voltage applied between the pair of electrically conductive portions.

The imaging device achieved in a seventh mode of the present invention comprises the terahertz light generation element described earlier, the terahertz light detection unit used in the fourth mode, the bias voltage control unit described above and an image acquisition means for obtaining an image signal. The image acquisition means obtains the image signal based upon a first electrical signal provided by the terahertz light detection unit while the bias voltage with a given polarity is applied between the pair of electrically conductive portions and a second electrical signal provided by the terahertz light detection unit while the bias voltage with another polarity is applied between the pair of electrically conductive portions. Namely, it obtains an image of a measurement object based upon image signals corresponding to individual positions that are output from the terahertz light detection unit. The image acquisition means may obtain each image signal by calculating the difference between the first electrical signal and the second electrical signal.

In the terahertz light modulation method achieved in a seventh mode of the present invention, a terahertz generation unit having a photoconductive unit and a terahertz light generation element that generates terahertz light as a bias electric field is applied to the photoconductive unit and it is emitted with pulse light is utilized and the polarity of the electric field of the terahertz light generated by the terahertz light generation element is modulated.

The terahertz light generation element may be constituted by forming an electrically conductive portion on an upper surface of a photoconductive layer formed at an upper surface of a substrate.

BRIEF DESCRIPTION OF THE DRAWINGS

FIG. 1 schematically illustrates the terahertz light device achieved in a first embodiment of the present invention;
FIG. 2(a) is a front view of the terahertz light generation element in FIG. 1, FIG. 2(b) is a sectional view of the terahertz light generation element taken along line I-I and FIG. 2(c) presents an example of a variation of FIG. 2(b);
FIG. 3 (a) shows an example of inversion of the polarity of the bias voltage applied to the terahertz light generation element by the bias voltage control unit in FIG. 1 and FIGS. 3(b) through 3(d) show the levels of the signals detected by the photodetectors 19 and 20, which change as the polarity is inverted, as shown in FIG. 3(a), and the level of the signal representing the difference between the signals at the photodetectors;
FIG. 4 schematically illustrates the terahertz light device achieved in a second embodiment of the present invention; and
FIGS. 5(a) and 5(b) are waveform diagrams of the waveforms of the terahertz light electric fields generated when the bias voltage with one polarity is applied to the terahertz light generation element and when the bias voltage with the other polarity is applied to the terahertz light generation element respectively.

BEST MODE FOR CARRYING OUT THE INVENTION

The following is an explanation of the terahertz light modulation method (the modulation drive method for a terahertz light generation element) according to the present invention, and the terahertz light detection method, the imaging method, the imaging device and the terahertz light device achieved by adopting the terahertz light modulation method, given in reference to the drawings.

(Feature of the Present Invention)

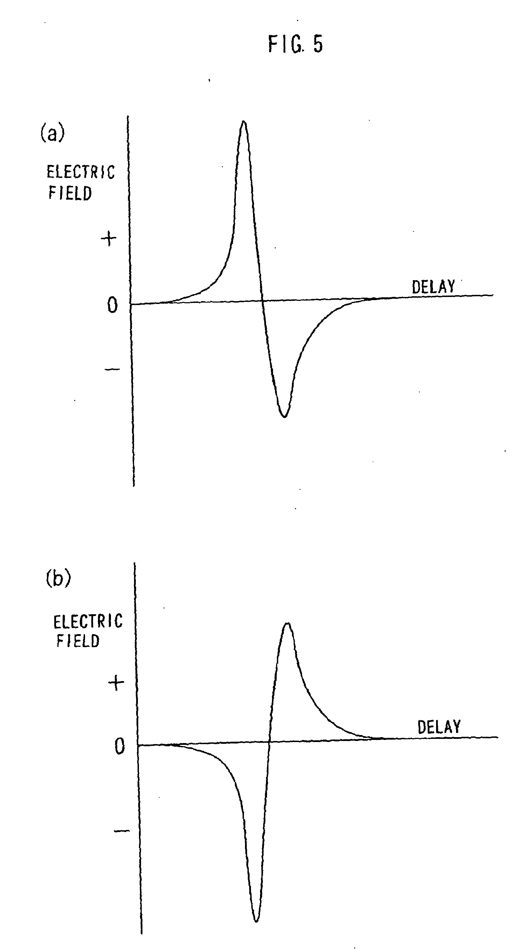

Before describing the embodiments of the present invention, the feature of the present invention is briefly explained.
One of the aspects that characterize terahertz time-resolved measurement is that the electric field of terahertz light, instead of the intensity of the terahertz light, is measured. In other words, the measurement can be achieved by distinguishing a negative electric field from a positive electric field, as shown in FIG. 5(a).
When a photonic switch element such as a photoconductive antenna is utilized as a terahertz light source, a bias voltage is applied between electrodes. This bias voltage determines the direction of the photocurrent flow and ultimately determines the polarity of the electric field of the terahertz light. Namely, if the polarity of the bias voltage applied to the terahertz light source is inverted, the polarity of the terahertz light that is generated is also inverted as shown in FIG. 5(b).
A method adopted in the related art is first explained so as to clearly present the feature of the present invention. In the method in the related art, the measurement results obtained while terahertz light is in an ON state and the measurement results obtained while the terahertz light is in an OFF state are alternately obtained at a constant frequency when a photonic switch element such as a photoconductive antenna is utilized as the terahertz light source. While information corresponding to the terahertz light is only contained in first measurement results, the effect of noise is contained in both results. Accordingly, by amplifying only the measurement results synchronous with the constant frequency, a terahertz light signal should be detected with a high degree of accuracy while minimizing the adverse effect of the noise. While a lock-in amplifier is normally employed for these purposes, the detection may be achieved through software processing executed on a computer or the like. During this process, the terahertz light is turned off by using a light chopper or an EO (electro-optic) modulator, or by setting the bias voltage to 0V.
In the method in the related art, the terahertz light is forcibly turned off from the outside as described above. In other words, although the device is capable of generating terahertz light during this period of time, the device capability is not effectively utilized.
According to the present invention, which has been achieved by focusing on this point, the polarity of the terahertz light is inverted instead of turning off the terahertz light. According to the present invention, the results of a measurement executed by applying a positive bias voltage and the results of a measurement executed by applying a negative bias voltage are alternately obtained. While the sign assigned to the information indicating the influence of the noise remains unchanged in the two types of measurement results, the terahertz light information contained in the one type of measurement results is assigned with a sign opposite from the sign assigned to the terahertz light information contained in the other type of measurement results. Thus, the influence of the noise can be lowered as in the method in the related art and, at the same time, the intensity of the terahertz light signal can be double that in the method in the related art by calculating the difference between the two types of results.
When a lock-in amplifier is used, a signal synchronous with the polarity switching of the bias voltage is used as a reference signal. The lock-in amplifier extracts only a component in an input signal, which is synchronous with the reference signal at a predetermined frequency and achieves a predetermined phase relation to the reference signal. In the method in the related art, which utilizes a light chopper or the like, the amplitude of the component in the input signal, which is synchronous with the reference signal and achieves a predetermined phase relation to the reference signal is equal to the difference between the measurement results obtained when the terahertz light is in an ON state and the measurement results obtained when the terahertz light is in an OFF state.

According to the present invention, on the other hand, the amplitude of the component in the input signal which is synchronous with the reference signal and achieves a predetermined phase relation to the reference signal, is equal to the difference between the measurement results obtained when the bias voltage with one polarity is applied and the measurement results obtained when the bias voltage with the other polarity is applied, and the value of this difference is twice as large as that achieved in the method in the related art. Namely, by improving the terahertz light utilization efficiency, the signal intensity can be increased. According to the present invention, the SN ratio can be improved over the method in the related art.

(First Embodiment)

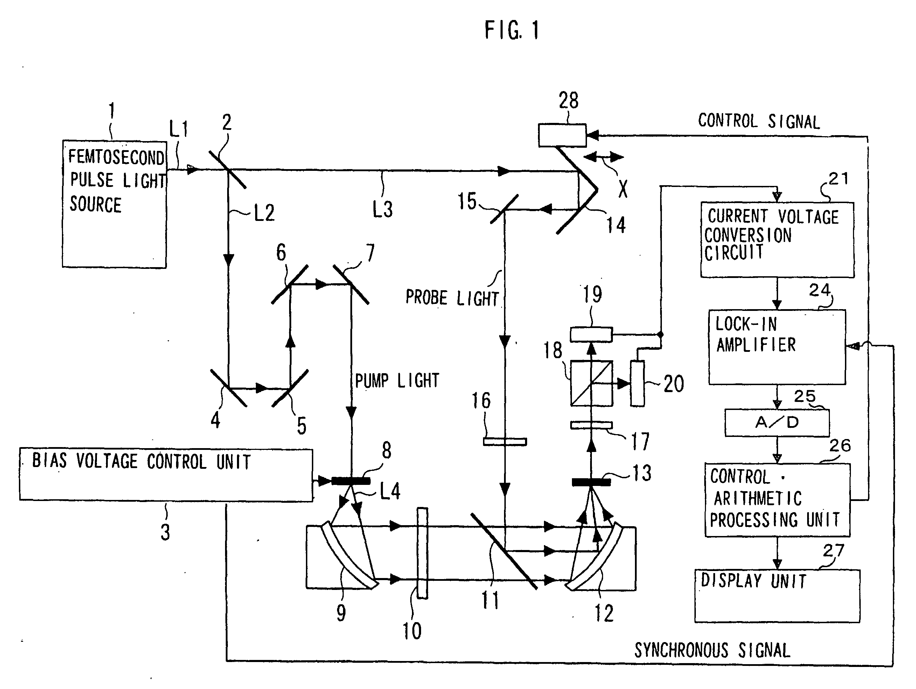

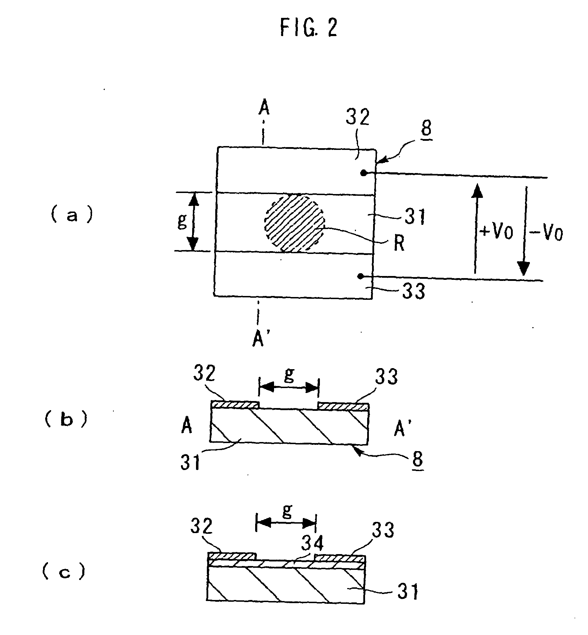

FIG. 1 schematically illustrates the structure of the terahertz light device achieved in the first embodiment of the present invention. FIG. 2 shows examples of the terahertz light generation element 8 included in FIG. 1, with FIG. 2 (a) presenting a schematic plan view of the terahertz light generation element 8, FIG. 2(b) presenting a schematic sectional view taken along line I-I in FIG. 2 (a) and FIG. 2 (c) presenting a schematic sectional view of a variation of the terahertz light generation element 8 shown in FIGS. 2 (a) and 2(b). FIG. 2(c) corresponds to FIG. 2(b).

In the terahertz light device in this embodiment, a femtosecond pulse light beam L1 emitted from a femtosecond pulse light source 1 is split into two pulse light beams L2 and L3 at a beam splitter 2. The femtosecond pulse light source 1 in the embodiment is constituted of a laser light source or the like. The femtosecond pulse light source 1 emits linearly polarized femtosecond pulse light L1 with a central wavelength of approximately 780 - 800nm within the near infrared range and a pulse width of approximately 10 - 150fs, for instance.

One of the pulse light beams achieved by splitting the pulse light at the beam splitter 2, i.e., the pulse light beam L2, excites a terahertz light generation element 8 and thus causes the element 8 to generate terahertz light. In other words, the pulse light beam L2 is used as pump light (pulse excitation light). This pump light L2 travels through plane mirrors 4 - 7 and is guided to the terahertz light generation element 8. As a result, the terahertz light generation element 8 becomes excited and emits terahertz light L4.

The terahertz light generation element 8 in the embodiment includes a substrate 31 constituting a photoconductive unit and electrically conductive films 32 and 33 constituting two electrically conductive portions isolated from each other, which are formed at one surface of the substrate 31, as shown in FIGS. 2(a) and 2 (b). The electrically conductive films 32 and 33 are set so that at least portions of the films are distanced from each other over a predetermined gap g along the upper plane of the substrate 31. In the embodiment, the entire electrically conductive films 32 and 33 are set apart from each other over the gap g. This gap g is set to extend over a length equal to or greater than 2mm, e.g., 5mm. As a result, a large-diameter photonic switch element is constituted by the substrate 31 and the electrically conductive films 32 and 33. It is to be noted that femtosecond pulse laser light is emitted as excitation pulse light from an ultra-short pulse laser or the like to an area R corresponding to the gap g, as shown in FIG. 2(a) in the embodiment. Although not shown, a lens or the like may be provided to adjust the size of the irradiation area as necessary.

The substrate 31 may be constituted of a semiconductor achieving a high level of specific resistance (e.g., semi-insulating GaAs). The electrically conductive films 32 and 33 may be formed at the surface of the substrate 31 by vapor deposition of, for instance, gold.

While the substrate 31 itself is used as the photoconductive unit in the embodiment, as explained earlier, a photoconductive film 34 may instead be formed on the substrate 31 as a photoconductive unit with the electrically conductive films 32 and 33 formed on the photoconductive film 34, as shown in FIG. 2(c). In the latter case, the substrate 31 may be constituted of GaAs and the photoconductive film 34 may be formed by using a low-temperature grown GaAs, for instance. Alternatively, the substrate 31 and the photoconductive film 34 may be respectively constituted of sapphire and silicon. It is to be noted that in FIG. 2(c), the same reference numerals are assigned to elements identical to or corresponding to the elements in FIGS. 2 (a) and 2 (b) to preclude the necessity for a repeated explanation thereof.

While a large-diameter photonic switch element is used as the terahertz light generation element 8 in the embodiment as described earlier, the present invention is not limited to this example and a terahertz light generation element achieved by, for instance, forming a dipole antenna on a photoconductive film on a substrate constituted of GaAs or the like may be used instead.

The terahertz light generation element 8 having a large gap g between the electrically conductive films as described above is referred to as a large-diameter photonic switch element to distinguish it from a terahertz light generation element with a gap ranging over only several μm to several tens of μm (e.g., a dipole element, a strip line element or the like, to be referred to as a small-diameter photonic switch element in this description). The gap g between the two electrically conductive films at the large-diameter photonic switch element as referred to in this context should extend over several mm - several tens of mm and more desirably, over a range equal to or greater than 2 mm and equal to or smaller than 50 mm, and similar values apply with regard to the spot diameter of the laser light emitted on the area between the two electrically conductive films.

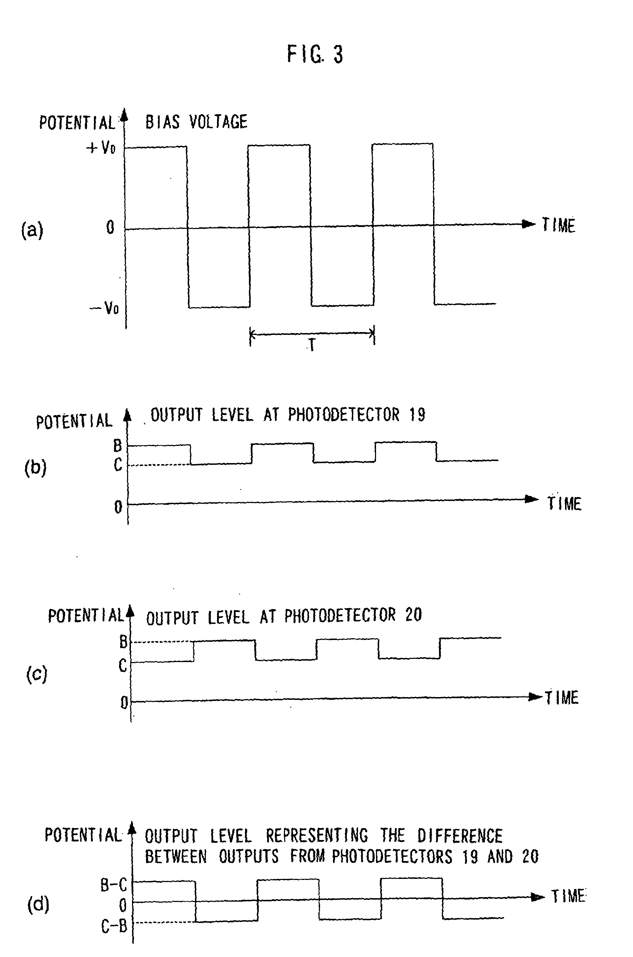

A bias voltage whose polarity is sequentially inverted is applied between the electrically conductive films 32 and 33 at the terahertz light generation element 8 by the bias voltage control unit 3. An example of the bias voltage applied between the electrically conductive films 32 and 33 by the bias voltage control unit 3 is shown in FIG. 3(a). The horizontal axis in FIG. 3(a) represents the time and the vertical axis in FIG. 3(a) represents the potential at the electrically conductive film 32 relative to the potential (0V) at the electrically conductive film 33. In the example presented in FIG. 3(a), a positive voltage +V0 and a negative voltage -V0 are sequentially applied over a constant cycle T (a constant frequency f = 1/T) and at a duty ratio of 50% between the electrically conductive films 32 and 33. However, the duty ratio does not need to be exactly 50% or the cycle (the frequency) does not need to be constant. In addition, the absolute values of the positive voltage and the negative voltage may be different from each other.

With the bias voltage with its polarity sequentially inverted applied between the electrically conductive films 32 and 33 by the bias voltage control unit 3, the polarity of the electric field of the terahertz light L4 generated by the terahertz light generation element 8 is modulated. Assuming that terahertz light such as that shown in FIG. 5 (a) is generated in response to the pump light L2 when the positive voltage + V0 is applied, terahertz light such as that shown in FIG. 5(b) with an electric field polarity inverted from that in FIG. 5(a) is generated in response to the pump light L2 when the negative voltage -V0 is applied. In addition, the bias voltage control unit 3 outputs a synchronous signal synchronous with the polarity inversion of the bias voltage, and this synchronous signal is provided as a reference signal to a lock-in amplifier 24 which is to be detailed later.

The circuit structure of the bias voltage control unit 3 engaged in the operation described above is of the known art. If a dipole antenna having electrodes distanced from each other over a gap ranging over several μm is utilized as the terahertz light generation element 8, the voltage that is applied (the bias voltage) should be approximately several tens of volts. A circuit used to switch the polarities of the electrodes at such a voltage level can be manufactured easily by using an operational amplifier or the like. However, a voltage within a range of several kV to several tens of kV needs to be applied when a large-diameter photonic switch element with an electrode interval of several mm - several tens of mm is used as the terahertz light generation element 8. High speed polarity switching at such a high voltage level may be achieved by, for instance, using a high-speed high-voltage operational amplifier power supply (HEOPT - 20B10) manufactured by MATSUSADA Precision Company Limited.

The cycle period of the femtosecond pulse light L1 emitted from the femtosecond pulse light source 1 may be, for instance, in the order of several KHz through 100 MHz. The frequency f of the inversion of the polarity of the bias voltage applied between the electrically conductive films 32 and 33 may be within a range of, for instance, several Hz through 100 KHz.

In the embodiment, the femtosecond pulse light source 1 described earlier, the beam splitter 2, the plane reflecting mirrors 4 - 7, the terahertz light generation element 8 and the bias voltage control unit 3 constitute the terahertz light generation unit.

The terahertz light L4 generated at the terahertz light generation element 8 should preferably be light within a frequency range of approximately $0.01 \times 10^{12}$ - $100 \times 10^{12}$. The terahertz light L4 is converted to parallel light through a mirror 9 with a curved surface such as a parabolic mirror, is transmitted through a measurement object 10 and a beam splitter 11, and then is condensed at a terahertz light detection element 13 by a mirror 12 with a curved surface such as a parabolic mirror. In the embodiment, a non-linear optical crystal (an electro-optic crystal) such as ZnTe is used to constitute the detection element 13. Thus, as the terahertz light enters the detection element 13, the electric field of the terahertz light causes a birefringence change within the crystal through the electro-optic effect. By detecting this birefringence change with probe light, the intensity of the terahertz light electric field is detected, as detailed later.

The other pulse light L3 obtained by splitting the pulse light L1 at the beam splitter 2 is used as the probe light when detecting the terahertz light. This probe light L3 travels through a movable mirror 14 constituted by combining two or three plane reflecting mirrors, a plane reflecting mirror 15 and a half wave plate 16, enters the beam splitter 11 and then is reflected. The reflected light advances in the light path of the terahertz light along the same direction as the direction in which the terahertz light advances, and is condensed by the curved surface mirror 12 at the same spot of the detection element 13 at which the terahertz light is condensed. The probe light is linearly polarized light.

The probe light condensed at the detection element 13 by the curved surface mirror 12 is transmitted through the detection element 13. The state of the polarization of the transmitted light shifts in correspondence to the birefringence change at the detection element 13 caused by the terahertz light, i.e., in correspondence to the change in the electric field intensity of the terahertz light, and the transmitted light becomes elliptically polarized light. The difference between the polarization state of the linearly polarized light and the polarization state of the elliptically polarized light constitutes information indicating the terahertz light electric field intensity. In other words, the polarization state of the probe light has the information indicating the terahertz light electric field intensity. The probe light having been transmitted through the detection element 13 is then transmitted through a quarter wave plate 17. At this time, the information indicating the terahertz light electric field intensity is converted to the difference between the polarization state of the probe light and the polarization state of the circularly polarized light. The probe light having been transmitted through the quarter-wave plate 17 is then separated into a p-polarized light component and an s-polarized light component at a polarization beam splitter 18 and these light components are respectively detected by photodetectors 19 and 20 each constituted of a photodiode or the like.

Although not shown in detail, the photodetectors 19 and 20 are connected to an input terminal of a current voltage conversion circuit 21 through a reverse parallel connection (a parallel connection with the polarities of the photodetectors reversed from each other). As a result, a current equivalent to the difference between the photodetection currents obtained at the photodetectors 19 and 20, i.e., a current corresponding to the difference between the quantities of light detected by the photodetectors 19 and 20, is supplied to the current voltage conversion circuit 21. The current representing the difference is then converted to a voltage signal at the current voltage conversion circuit 21, and the output from the current voltage conversion circuit 21 is input to the lock-in amplifier 24 as an electrical signal corresponding to the intensity of the electric field of the terahertz light that reaches the detection element 13.

When the polarity of the bias voltage is positive (+ V0) as shown in FIG. 3(a), the output of the photodetector 19 is at a level B (see FIG. 3(b)) and the output of the photodetector 20 is at level C (see FIG. 3(c)). The output representing the difference between the outputs of the photodetector 19 and the photodetector 20 is at a level (B - C). Likewise, when the polarity of the bias voltage is negative (-V0) as shown in FIG. 3(a), the output of the photodetector 19 is at level C (see FIG. 3(b)) and the output of the photodetector 20 is at level B (see FIG. 3(c)). The output representing the difference between outputs of the photodetector 19 and the photodetector 20 is at a level (C - B) (see FIG. 3(d)).

As a result, even when the output signals from the photodetectors 19 and 20 both contain a noise signal, the noise signal is eliminated and only the signal component is output, as shown in FIG. 3(d). Ultimately, by obtaining an output signal representing the difference between the outputs from the two photodetectors as the polarity of the bias voltage is inverted, a signal level that is approximately twice as high can be output.

A particularly desirable effect is achieved when the difference between the detection signals from the photodetectors 19 and 20 is obtained by using the quarter-wave plate 17, the polarization beam splitter 18 and the two photodetectors 19 and 20, as the SN ratio is further improved in the terahertz light electric field intensity detection. However, instead of providing the quarter-wave plate 17, the polarization beam splitter 18 and the photodetector 20, an analyzer may be provided between the detection element 13 and the photodetector 19 to utilize the detection signal at the photodetector 19 as a terahertz light detection signal. It is to be noted that the half-wave plate 16 is provided to set the polarization direction of the linearly polarized light of the probe light entering the detection element 13 so as to achieve a specific relation to the crystal orientation at the detection element 13 and the polarization direction of the terahertz light. If the pulse light emitted from the femtosecond pulse light source 1 is not linearly polarized light, a polarizer should be utilized instead of the half-wave plate 16.

It is to be noted that instead of constituting the detection element 13 with a nonlinear optical crystal, the detection element 13 may be constituted by using a detector having a dipole antenna formed over a photoconductive film on a substrate constituted of GaAs or the like, for instance. In such a case, the quarter-wave plate 17, the polarization beam splitter 18 and the two photodetectors 19 and 20 in FIG. 1 can be omitted. The current generated at the detector is converted to a voltage signal at the current voltage conversion circuit 21 and is then input to the lock-in amplifier 24 in such a structure.

In the embodiment, the femtosecond pulse light source 1, the beam splitter 2, the beam splitter 11, the detection element 13, the movable mirror 14, the plane reflecting mirror 15, the half-wave plate 16, the quarter-wave plate 17, the polarization beam splitter 18 and the two photodetectors 19 and 20 constitute a terahertz light detection unit that outputs an electrical signal corresponding to the intensity of the terahertz light electric field.

In the embodiment, the lock-in amplifier 24 uses the electrical signal corresponding to the intensity of the terahertz electric field as an input signal and uses a synchronous signal synchronous with the inversion of the polarity of the bias voltage as a reference signal.

In the embodiment, the current voltage conversion circuit 21 and the lock-in amplifier 24 together function as a signal processing unit that only extracts and amplifies a component contained in the output signal from the terahertz light detection unit, which achieves a frequency matching the frequency of the reference signal synchronous with the inversion of the bias voltage polarity and achieves a predetermined phase relation to the reference signal.

The output signal from the lock-in amplifier 24, which constitutes the detection signal indicating the terahertz light electric field intensity, undergoes an A/D conversion at an A/D converter 25, and the signal resulting from the conversion is provided to a control arithmetic processing unit 26 constituted of a computer or the like.

The movable mirror 14 provided on the light path of the probe light L3 can be moved by a moving mechanism 28 along the direction indicated by the arrow X under control implemented by the control arithmetic processing unit 26. The length of the light path of the probe light L3 is altered in correspondence to the distance over which the movable mirror 14 is caused to move and, as a result, the arrival of the probe light L3 at the detection element 13 is delayed. Namely, the movable mirror 14 and the moving mechanism 28 together function as a time delay device for the probe light L3 in the embodiment.

As explained earlier, the intensity of the electric field of the terahertz light having been transmitted through the measurement object 10 is converted to become the detection signal, i.e., the output signal from the lock-in amplifier 24.

The cycle period of the femtosecond pulse light L1 emitted from the femtosecond pulse light source 1 is in the order of several KHz - 100 MHz as mentioned earlier. Accordingly, the terahertz light L4 emitted from the terahertz light generation element 8, too, is repetitiously emitted in the order of several KHz - 100 MHz. At present, it is difficult to measure the exact waveform of such terahertz light instantaneously.

Accordingly, the so-called pump-probe method whereby the waveform of the terahertz light is measured by creating a delay between the pump light L2 and the probe light L3 is adopted in the embodiment since the characteristics of the terahertz light L4, i.e., the terahertz light L4 with an unchanging waveform comes in repetitiously in the order of several KHz - 100 MHz. Namely, by delaying the timing with which the terahertz light detection element 13 is engaged in operation by a time length $\tau$ relative to the timing with which the pump light L2 is used to engage the terahertz light generation element 8 in operation, the intensity of the electric field of the terahertz light can be measured at a time point following the delay $\tau$. In other words, the probe light L3 may be regarded to apply a gate to the terahertz light detection element 13. In addition, by moving the movable mirror 14 gradually, the length of the delay $\tau$ is gradually altered. By shifting the timing of the gate application with the delay device and thus sequentially obtaining from the lock-in amplifier 24 detection signals indicating the intensity levels of the electric field of the terahertz light arriving repetitiously at various time points following the individual delays $\tau$, a time-series waveform E ($\tau$) representing the terahertz light electric field intensity over time can be measured.

When measuring the time-series waveform E ($\tau$) of the terahertz light electric field intensity, the data from the A/D converter 25 are sequentially stored into the memory (not shown) in the control arithmetic processing unit 26 while the control arithmetic processing unit 26 gradually changes the length of the delay $\tau$

by providing a control signal to the moving mechanism 28. Thus, the entire data indicating the time-series waveform E($\tau$) of the terahertz light electric field intensity are ultimately stored into the memory. Data indicating such a time-series waveform E($\tau$) are obtained by placing the measurement object 10 at the position indicated in FIG. 1 and also without placing the measurement object 10 at the position. Based upon these data, the control arithmetic processing unit 26 determines desired characteristics of the measurement object and displays the characteristics thus determined at a display unit 27 which may be constituted of a CRT. For instance, the control arithmetic processing unit 26 may calculate the complex refractive index of the measurement object 10 through a method in the known art (e.g., a method disclosed by Duvillaret et al. (in an article entitled "A Reliable Method For Extraction Of Material Parameters In Terahertz Time-domain Spectroscopy", IEEE Journal of Selected Topics in Quantum Electronics, Vol 2, No. 3, pp 739 - 746 (1996 by Lionel Duvillaret, Frederic Garet and Jean-Louis Coutaz) and display the calculated complex refractive index at the display unit 27.

Since parallel terahertz light beams are emitted over a specific area of the measurement object 10 and the transmitted light is condensed at a local area of the detection element 13, characteristics such as the average complex refractive index over the terahertz light irradiation range at the measurement object 10 are obtained in the embodiment. The characteristics such as the complex refractive index at a local area of the measurement object 10 may be ascertained through the following method, for instance. A condenser lens that condenses the parallel terahertz light at a local area of the measurement object 10 is provided between the curved mirror 9 and the measurement object 10. In addition, a collimator lens that reconverts the light having been transmitted through the measurement object 10 to parallel light is provided between the measurement object 10 and the beam splitter 11.

As explained earlier, the polarity of the electric field of the terahertz light L4 generated at the terahertz light generation element 8 is modulated as the polarity of the bias voltage applied between the two electrically conductive films 32 and 33 at the terahertz light generation element 8 is sequentially inverted by the bias voltage control unit 3 in the embodiment. Then, the lock-in amplifier 24 exclusively extracts and amplifies the component in the electrical signal obtained from the current voltage conversion circuit 21, which has a frequency matching the frequency of the reference signal synchronous with the bias voltage polarity inversion and achieves a predetermined phase relation to the reference signal, and outputs the amplified component as a detection signal.

Thus, as has been explained in "Feature of the Present Invention" earlier, while the terahertz light generation element 8 is constituted of a photonic switch element, the utilization efficiency of the terahertz light is improved to achieve a great improvement in the SN ratio in the embodiment.

(Second Embodiment)

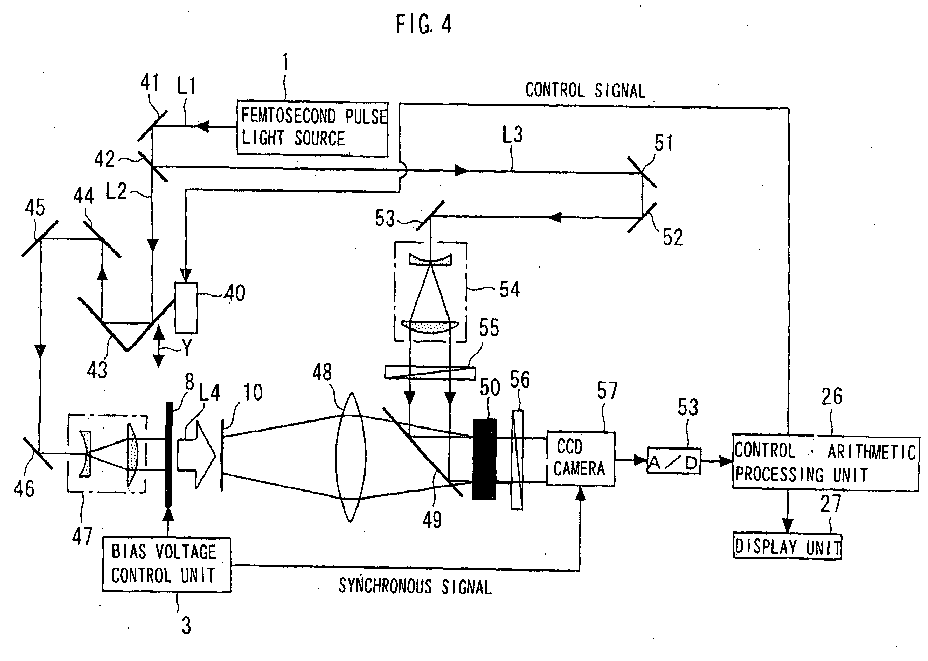

FIG. 4 schematically illustrates the structure of the terahertz light device achieved in the second embodiment of the invention. In FIG. 4, the same reference numerals are assigned to elements identical to or corresponding to elements shown in FIG. 1 to preclude the necessity for a repeated explanation thereof.

The terahertz light device in the second embodiment is an imaging device that forms an image of a measurement object 10.

In the terahertz light device in the embodiment, a femtosecond pulse light beam L1 emitted from a femtosecond pulse light source 1 passes through a plane reflecting mirror 41 and is split into pump light L2 and probe light L3 at a beam splitter 42. The pump light L2 travels through a movable mirror 43 constituted by combining two or three plane reflecting mirrors and plane mirrors 44 - 46, is expanded at a beam expander 47 and is then guided to a terahertz light generation element 8 adopting the structure similar to that in the first embodiment. As a result, the terahertz light generation element 8 becomes excited and emits terahertz light L4. As in the first embodiment, the polarity of the electric field of the terahertz light L4 generated at the terahertz light generation element 8 is modulated as a bias voltage control unit 3 applies a bias voltage whose polarity is sequentially inverted to an area between electrically conductive films 32 and 33.

In the embodiment, a terahertz light generation unit is constituted with the femtosecond pulse light source 1, the bias voltage control unit 3, the terahertz light generation element 8, the plane reflecting mirror 41, the beam splitter 42, the movable mirror 43, the plane mirrors 44 - 46 and the beam expander 47.

The terahertz light L4 generated at the terahertz light generation element 8 reaches a two-dimensional area of a terahertz light detection element 50 constituted of a nonlinear optical crystal (electro-optic crystal) such as ZnTe via an image forming lens 48 and a beam splitter 49. An image of a two-dimensional area of a measurement object 10, achieved with the terahertz light having been transmitted through the two-dimensional area, is formed by the image forming lens 48 over the two-dimensional area of the terahertz light detection element 50. As the terahertz light enters the two-dimensional area of the detection element 50, a birefringence change occurs at each point of entry in the area due to the electro-optic effect occurring inside the crystal attributable to the electric field of the terahertz light having entered the point of entry. By detecting such birefringence changes with the probe light as detailed later, the intensity levels of the electric field of the terahertz light at individual points of entry are detected.

The probe light L3 achieved by splitting the pulse light L1 at the beam splitter 42 passes through plane mirrors 51 - 53, is expanded at a beam expander 54 and enters a polarizer 55 from which linearly polarized light is emitted. This linearly polarized light is reflected at the beam splitter 49 and enters the same two-dimensional area of the terahertz light detection element 50 where the terahertz light enters.

The probe light, which is the linearly polarized light having been reflected at the beam splitter 49, is then transmitted through the detection element 50. The state of the polarization of the transmitted light shifts in correspondence to the birefringence change at the detection element 50 caused by the terahertz light, i.e., in correspondence to the change in the terahertz light electric field intensity at each point of entry of the detection element 50, and the transmitted light becomes elliptically polarized light. The difference between the polarization state of the linearly polarized light and the polarization state of the elliptically polarized light constitutes information indicating the terahertz light electric field intensity. In other words, the polarization state of the probe light has the information indicating the terahertz light electric field intensity. The probe light having been transmitted through the detection element 50 is analyzed at an analyzer 56. Subsequently, the light intensity distribution is detected with a two-dimensional CCD camera 57. Image signals indicating the light intensity distribution provided by the two-dimensional CCD camera 57 undergo an A/D conversion at an A/D converter 53A and then are taken into a control arithmetic processing unit 26. Thus, electrical signals indicating the terahertz light electric field intensity distribution (varying levels of electric field intensity at the individual points) are all taken into the control arithmetic processing unit 26 as data.

During this process, the two-dimensional CCD camera 57 captures an image in synchronization with a synchronous signal which is output from the bias voltage control unit 3 and is synchronous with the bias voltage polarity inversion. For instance, a single frame image may be captured during a period in which the bias voltage achieves a given polarity and another single frame image may be captured during a period in which the bias voltage achieves the other polarity.

As explained above, the femtosecond pulse light source 1, the plane reflecting mirror 41, the beam splitter 42, the beam splitter 49, the detection element 50, the plane mirrors the 51 - 53, the A/D converter 53A, the beam expander 54, the polarizer 55, the analyzer 56 and the two-dimensional CCD camera 57 constitute a terahertz light detection unit.

The terahertz light detection unit outputs electrical signals each indicating the intensity level of the electric field of the terahertz light having reached a given point in the two-dimensional area of the detection element 50 via the two-dimensional area of the measurement object 10 in correspondence to the individual points. It is to be noted that such a terahertz light detection unit may be constituted by using a terahertz light detector having photonic switch elements disposed in a two-dimensional pattern instead of by using a means for image capturing such as a two-dimensional CCD camera as in the embodiment.

In the embodiment, the control á arithmetic processing unit 26 obtains image data indicating the difference between the image data captured while the bias voltage is at a given polarity and the image data captured while the bias voltage is at the other polarity at each pixel as detection image data. The individual sets of pixel data contained in the detection image data constitute detection data corresponding to the individual points.

In the embodiment, the control arithmetic processing unit 26 obtains the detection image data through the following signal processing. A detection signal or detection data reflecting the difference between the signal component (including the sign) which corresponds to a given bias voltage polarity in the electrical signal provided by the terahertz light detection unit and the signal component (including the sign) corresponding to the other bias voltage polarity in the electrical signal provided by the terahertz light detection unit is obtained in correspondence to each point of the area.

The movable mirror 43 provided on the light path of the pump light L2 can be moved by a moving mechanism 40 along the direction indicated by the arrow Y under control implemented by the control arithmetic processing unit 26. The length of the light path of the pump light L2 is altered in correspondence to the distance over which the movable mirror 43 is caused to move and, as a result, the arrival of the pump light L2 at the terahertz light generation element 8 is delayed. Namely, the movable mirror 43 and the moving mechanism 40 together function as a delay device for the pump light L2 in the embodiment. While the delay is applied to the pump light L2 in the embodiment, the concept is substantially consistent with the concept of the first embodiment in which the delay is applied to the probe light L3.

The control arithmetic processing unit 26 sequentially obtains detected image data, i.e., the distribution of the terahertz light electric field intensity detection data, at time points each following a delay (a time lag of the terahertz light relative to the probe light) $\tau$ by controlling the moving mechanism 40 and gradually moving the movable mirror 43 and thus it obtains a time-series waveform $E(\tau)$ of the terahertz light electric field intensity in correspondence to each point. The data indicating such time series waveforms $E(\tau)$ corresponding to the individual points are obtained by placing the measurement object 10 at the position indicated in FIG. 4 and also without placing the measurement object 10 at the position. Based upon these data, the control arithmetic processing unit 26 ascertains desired characteristics of the measurement object at the individual points, i.e., a desired characteristics distribution, and displays the desired characteristics thus ascertained at a display unit 27 which may be a CRT as an image.

As explained earlier, the polarity of the electric field of the terahertz light L4 generated at the terahertz light generation element 8 is modulated as the polarity of the bias voltage applied between the two electrically conductive films 32 and 33 at the terahertz light generation element 8 is sequentially inverted by the bias voltage control unit 3 in the embodiment. Then, the two-dimensional CCD camera 57 captures images in synchronization with the synchronous signal synchronous with the bias voltage polarity inversion. In addition, the control arithmetic processing unit 26 obtains image data indicating the difference between the image data captured while the bias voltage is at a given polarity and the image data captured while the bias voltage is at the other polarity at each pixel as the detection image data.

Thus, as has been explained in "Feature of the Present Invention" earlier, while the terahertz light generation element 8 is constituted of a photonic switch element, the utilization efficiency of the terahertz light is improved over the related art to achieve a great improvement in the SN ratio in the embodiment. Furthermore, since it is not necessary to provide a lock-in amplifier for each pixel in the embodiment, a cost reduction can be achieved and, at the same time, space can be saved.

Depending upon the type of electro-optic crystal used to constitute the detection element 50, the light intensity I detected by the CCD camera 57 may be defined as in mathematical expression (1) below. In mathematical expression (1), 10 represents the intensity of the probe light, $\Gamma$ represents the contribution of the birefringence induced by the electric field of the terahertz light, $\Gamma 0$ represents the contribution of the residual index of birefringence at the electro-optic crystal and $\eta$ represents the contribution of scattering probe light. The expression is modified by assuming that $|\Gamma 0 + \Gamma| \ll 1$. A signal which is in proportion to the light intensity I is output from each pixel at the CCD camera 57. It is to be noted that a similar principle applies when the detection element 50 is constituted of a magneto-optic crystal.

$$I = I0 \, (\eta + \sin^2(\Gamma 0 + \Gamma))$$

$$P \; I0 \, (\eta + (\Gamma 0 + \Gamma)^2) \qquad (1)$$

Since $\Gamma$ is in proportion to the electric field E (including the sign) of the terahertz light, the light intensity I detected through the cross polarization method shown in FIG. 4 can be described in a quadratic expression of the electric field E of the terahertz light such as mathematical expression (2) below, as mathematical expression (1) clearly indicates. It is to be noted that $\alpha$ and $\beta$ in mathematical expression (2) are constants.

$$I = \alpha E^2 + \beta E + \gamma \qquad (2)$$

As described earlier, when the polarity of the bias voltage applied to the terahertz light generation element 8 is reversed, the polarity of the electric field of the terahertz light emitted from the terahertz light generation element 8 becomes reversed. Namely, assuming that E represents the electric field of the terahertz light when the voltage +V0 is applied in FIG. 3(a), the electric field of the terahertz light is (-E) when the voltage -V0 is applied. I' representing the light intensity achieved when the electric field of the terahertz light is (-E) may be expressed as in the following mathematical expression (3).

$$I' = \alpha(-E)^2 + \beta(-E) + \gamma = \alpha E^2 - \beta E + \gamma \qquad (3)$$

The difference $\Delta I$ between light intensity I in mathematical expression (2) and the light intensity I' in mathematical expression (3) can be calculated as in mathematical expression (4), which indicates that the difference $\Delta I$, including its sign, is in proportion to the amplitude (the electric field) of the terahertz light. Namely, even when an electro-optic crystal having characteristics as indicated in mathematical expression (1) is used to constitute the detection element 50, a differential signal representing the difference between an image signal obtained with regard to the terahertz light generated when the bias voltage assumes a positive polarity and an image signal obtained with regard to the terahertz light generated when the bias voltage assumes a negative polarity is in proportion to the electric field E of the terahertz light including its sign.

$$\Delta I = I - I' = 2\beta E \qquad (4)$$

This indicates that there is no need to execute complicated calibration processing when performing a quantitative measurement such as spectrometry. In contrast, if a two-dimensional image is to be generated by using only the image signals obtained with regard to the terahertz light generated when the bias voltage assumes either a positive polarity or a negative polarity, the relationship between the electric field E of the terahertz light from the measurement object 10 and the light intensity I detected by the CCD camera 57 is not a proportional relationship such as that expressed in mathematical expression (2). For this reason, the output signal from each pixel needs to be calibrated by using mathematical expression (2).

For instance, supposing that the ratio of the output signals from two pixels is 2, the ratio of the corresponding electric fields E is less than 2, since I is defined in a quadratic expression of E as in mathematical expression (2). Since the value of the signal from each pixel must be in proportion to the corresponding electric field E when generating a two-dimensional image, each output signal must be calibrated so as to achieve a proportional relationship to the electric field E.

While the present invention has been explained in reference to the embodiments, the invention is not limited to these examples. For instance, a terahertz light generation element that may adopt the present invention may assume a structure other than those in the embodiments as long as it includes a photoconductive unit and generates terahertz light as a bias electric field is applied to the photoconductive unit and pulse light is irradiated.

**Claims**

1. A modulation drive method for a terahertz light generation element that includes at least a pair of electrically conductive portions formed at a photoconductive unit over a predetermined distance from each other and emits terahertz light as excitation pulse light is emitted onto an area between the electrically conductive portions while a bias voltage is applied between the pair of electrically conductive portions, wherein:

   a polarity of an electric field of the terahertz light is modulated by inverting the polarity of the bias voltage applied between the pair of electrically conductive portions.

2. A modulation drive method for a terahertz light generation element according to claim 1, wherein:

   the terahertz light generation element is constituted by forming the electrically conductive portions at an upper surface of a photoconductive layer formed at an upper surface of a substrate.

3. A terahertz light detection method achieved by utilizing;

   a terahertz light generation element that includes at least a pair of electrically conductive portions formed at a photoconductive unit over a predetermined distance from each other and emits terahertz light as excitation pulse light is emitted onto an area between the electrically conductive portions while a bias voltage is applied between the pair of electrically conductive portions; and

   a terahertz light detection element that outputs an electrical signal corresponding to an intensity level of an electric field of the terahertz light which is output from the terahertz light generation element and enters the terahertz light detection element, the terahertz light detection method comprising:

modulating a polarity of the electric field of the terahertz light by inverting the polarity of the bias voltage applied between the pair of electrically conductive portions; and

obtaining a detection signal based upon a first electrical signal provided by the terahertz light detection element while the bias voltage achieving one polarity is applied between the pair of electrically conductive portions and a second electrical signal provided by the terahertz light detection element while the bias voltage achieving another polarity is applied between the pair of electrically conductive portions.

4. A terahertz light detection method according to claim 3, wherein:

the detection signal is obtained by calculating a difference between the first electrical signal and the second electrical signal.

5. A terahertz light detection method according to claim 3 or 4, wherein:

the terahertz light generation element is constituted by forming the electrically conductive portions at an upper surface of a photoconductive layer formed at an upper surface of a substrate.

6. A terahertz light detection method achieved by utilizing;

a terahertz light generation element that includes at least a pair of electrically conductive portions formed at a photoconductive unit over a predetermined distance from each other and emits terahertz light as excitation pulse light is emitted onto an area between the electrically conductive portions while a bias voltage is applied between the pair of electrically conductive portions; and

a terahertz light detection unit that outputs an electrical signal corresponding to an intensity level of an electric field of the terahertz light which is output from the terahertz light generation element and enters the terahertz light detection unit, the terahertz light detection method comprising:

modulating a polarity of the electric field of the terahertz light by inverting the polarity of the bias voltage applied between the pair of electrically conductive portions; and

amplifying the electrical signal provided by the terahertz light detection unit with a lock-in amplifier based upon a reference signal synchronous with the polarity inversion of the bias voltage applied between the pair of electrically conductive portions.

7. A terahertz light detection method according to claim 6, wherein:

the terahertz light generation element is constituted by forming the electrically conductive portions at an upper surface of a photoconductive layer formed at an upper surface of a substrate.

8. An imaging method for imaging a measurement object achieved by utilizing;

a terahertz light generation element that includes at least a pair of electrically conductive portions formed at a photoconductive unit over a predetermined distance from each other and emits terahertz light as excitation pulse light is emitted onto an area between the electrically conductive portions while a bias voltage is applied between the pair of electrically conductive portions; and

a terahertz light detection unit that two-dimensionally receives via the measurement object the terahertz light output from the terahertz light generation element and outputs electrical signals in correspondence to an intensity level of an electric field at individual points of entry of the terahertz light; the imaging method forming an image of the measurement object based upon the electrical signals corresponding to the individual points output from the terahertz light detection unit, the imaging method comprising:

modulating a polarity of the electric field of the terahertz light by inverting the polarity of the bias voltage applied between the pair of electrically conductive portions; and

obtaining a image signal based upon a first electrical signal provided by the terahertz light detection unit while the bias voltage achieving one polarity is applied between the pair of electrically conductive portions and a second electrical signal provided by the terahertz light detection unit while the bias voltage achieving another polarity is applied between the pair of electrically conductive portions.

9. An imaging method according to claim 8, wherein:

the image signal is obtained by calculating a difference between the first electrical signal and the second electrical signal.

10. An imaging method according to claim 8 or 9, wherein:

the terahertz light generation element is constituted by forming the electrically conductive portions at an upper surface of a photoconductive layer formed at an upper surface of a substrate.

11. A terahertz light device comprising;

a terahertz light generation element that includes at least a pair of electrically conductive portions formed at a photoconductive unit over a predetermined distance from each other and emits terahertz light as excitation pulse light is emitted onto an area between the electrically conductive portions while a bias voltage is applied between the pair of electrically conductive portions;
a terahertz light detection unit that outputs an electrical signal corresponding to an intensity level of an electric field of the terahertz light output from the terahertz light generation element and entering the terahertz light detection unit;
a bias voltage control unit that modulates the polarity of the electric field of the terahertz light by inverting the polarity of the bias voltage applied between the pair of electrically conductive portions; and
a signal processing unit that obtains a detection signal based upon a first electrical signal provided by the terahertz light detection unit while the bias voltage achieving one polarity is applied between the pair of electrically conductive portions and a second electrical signal provided by the terahertz light detection unit while the bias voltage achieving another polarity is applied between the pair of electrically conductive portions.

12. A terahertz light device comprising:

a terahertz light generation element that includes at least a pair of electrically conductive portions formed at a photoconductive unit over a predetermined distance from each other and emits terahertz light as excitation pulse light is emitted onto an area between the electrically conductive portions while a bias voltage is applied between the pair of electrically conductive portions;
a terahertz light detection unit that outputs an electrical signal corresponding to an intensity level of an electric field of the terahertz light output from the terahertz light generation element and entering the terahertz light detection unit;
a bias voltage control unit that modulates the polarity of the electric field of the terahertz light by inverting the polarity of the bias voltage applied between the pair of electrically conductive portions; and
a lock-in amplifier that amplifies the electrical signal provided by the terahertz light detection unit based upon a reference signal synchronous with the polarity inversion of the bias voltage applied between the pair of electrically conductive portions.

13. A terahertz light device according to claim 11 or 12, wherein:

the terahertz light generation element is constituted by forming the electrically conductive portions at an upper surface of a photoconductive layer formed at an upper surface of a substrate.

14. An imaging device comprising:

a terahertz light generation element that includes at least a pair of electrically conductive portions formed at a photoconductive unit over a predetermined distance from each other and emits terahertz light as excitation pulse light is emitted onto an area between the electrically conductive portions while a bias voltage is applied between the pair of electrically conductive portions;
a terahertz light detection unit that two-dimensionally receives via the measurement object the terahertz light output from the terahertz light generation element and outputs electrical signals in correspondence to an intensity level of an electric field at individual points of entry of the terahertz light;
a bias voltage control unit that modulates the polarity of the electric field of the terahertz light by inverting the polarity of the bias voltage applied between the pair of electrically conductive portions; and
an image acquisition means for obtaining an image signal constituting an image of the measurement object based upon a first electrical signal provided by the terahertz light detection unit while the bias voltage achieving one polarity is applied between the pair of electrically conductive portions and a second electrical signal provided by the terahertz light detection unit while the bias voltage achieving another polarity is applied between the pair of electrically conductive portions.

15. An imaging device according to claim 14, wherein:

the terahertz light generation element is constituted by forming the electrically conductive portions at an upper surface of a photoconductive layer formed at an upper surface of a substrate.

16. An imaging device according to claim 14, wherein:

the image acquisition means obtains a differential signal representing a difference between the first electrical signal and the second electrical signal as the image signal.

**17.** A terahertz light modulation method achieved by utilizing a terahertz generation unit that includes;

a photoconductive unit; and
a terahertz light generation element that generates terahertz light as a bias voltage is applied to the photoconductive unit and pulse light is emitted onto the photoconductive unit, the terahertz light modulation method comprising:

modulating the polarity of an electric field of the terahertz light generated by the terahertz light generation element.

FIG. 1

CONTROL SIGNAL

21 CURRENT VOLTAGE CONVERSION CIRCUIT

24 LOCK-IN AMPLIFIER

25 A/D

26 CONTROL · ARITHMETIC PROCESSING UNIT

27 DISPLAY UNIT

SYNCHRONOUS SIGNAL

20

19  18  17  13

12

X

28  14

15

PROBE LIGHT

16

11

PUMP LIGHT

10

7

8  L4

9

6

5

L3

L2

2

4

L1

1 FEMTOSECOND PULSE LIGHT SOURCE

BIAS VOLTAGE CONTROL UNIT

3

# FIG. 2

(a)

(b)

(c)

# FIG. 3

(a) POTENTIAL — BIAS VOLTAGE

(b) POTENTIAL — OUTPUT LEVEL AT PHOTODETECTOR 19

(c) POTENTIAL — OUTPUT LEVEL AT PHOTODETECTOR 20

(d) POTENTIAL — OUTPUT LEVEL REPRESENTING THE DIFFERENCE BETWEEN OUTPUTS FROM PHOTODETECTORS 19 AND 20

# FIG. 4

FEMTOSECOND PULSE LIGHT SOURCE

CONTROL SIGNAL

BIAS VOLTAGE CONTROL UNIT

SYNCHRONOUS SIGNAL

CCD CAMERA

A／D

CONTROL · ARITHMETIC PROCESSING UNIT

DISPLAY UNIT

EP 1 429 431 A1

# FIG. 5

(a)

(b)

## INTERNATIONAL SEARCH REPORT

| International application No. |
|---|
| PCT/JP02/09687 |

**A. CLASSIFICATION OF SUBJECT MATTER**
Int.Cl$^7$ H01S1/02, G01N21/01, G01N21/35

According to International Patent Classification (IPC) or to both national classification and IPC

**B. FIELDS SEARCHED**

Minimum documentation searched (classification system followed by classification symbols)
Int.Cl$^7$ H01S1/02, G01N21/01, G01N21/35

Documentation searched other than minimum documentation to the extent that such documents are included in the fields searched

| | | | |
|---|---|---|---|
| Jitsuyo Shinan Koho | 1940–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Yasutsugu MINAMIDE, "Submillimeter-ha no Hencho ni Kansuru Kenkyu", Tohoku University Dentsu Danwakai Kiroku, 1999, Vol.68, No.1, pages 126 to 129 | 1–16 |
| A | Kiyomi SAKAI et al., "Terahertz-ko Electronics", Oyobutsuri, 10 February, 2001 (10.02.01), Vol.70, No.2, pages 149 to 155 | 1–16 |
| A | FROBERG, N. et al., 500GHz electrically streerable photocunducting antenna array, Appl. Phys. Lett., Vol.58, No.5, 1991, pages 446 to 448 | 1–2,17 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 December, 2002 (20.12.02) | 14 January, 2003 (14.01.03) |

| Name and mailing address of the ISA/ | Authorized officer |
|---|---|
| Japanese Patent Office | |
| Facsimile No. | Telephone No. |

Form PCT/ISA/210 (second sheet) (July 1998)